# EUROPÄISCHE PATENTSCHRIFT

(11) **EP 2 918 322 B1**
(45) Veröffentlichungstag und Bekanntmachung des Hinweises auf die Patenterteilung: **04.01.2017**
(21) Anmeldenummer: 15158588.2
(22) Anmeldetag: 11.03.2015
(51) Int. Cl.: A63J 1/02, A47H 13/01

(54) **VORRICHTUNG ZUM AUFHÄNGEN VON TEXTILIEN**
DEVICE FOR HANGING TEXTILES
DISPOSITIF DE SUSPENSION DE TEXTILES

(30) Priorität: 11.03.2014 AT 501762014
(43) Veröffentlichungstag der Anmeldung: 16.09.2015
(73) Patentinhaber: Tüchler Bühnen- & Textiltechnik GmbH, 1220 Wien (AT)
(72) Erfinder: Ferk, Reinhard, 1220 Wien (AT)
(74) Vertreter: Patentanwälte Puchberger, Berger und Partner

(56) Entgegenhaltungen:
- CN-U- 202 312 774
- DE-A1-102007 015 313
- DE-U1- 29 906 503
- US-A1- 2007 234 833

## Beschreibung

Die Erfindung betrifft eine Vorrichtung zum Aufhängen von Textilien, wie etwa Vorhängen, mit einem Haltekörper, der an einer festen Struktur befestigbar ist, einer am Haltekörper fest angebrachten Gegenplatte, einer gelenkig am Haltekörper befestigten Andrückplatte, wobei die Andrückplatte mit der Gegenplatte eine Kluppe zum Festhalten der Textilien bildet, und mit einem Elektromagnet, der mit einer Ankerplatte zusammenwirkt, um die Kluppe zu schließen.

Solche Vorrichtungen werden beispielsweise in Theatern verwendet, um Vorhänge aufzuhängen, wobei die Möglichkeit gegeben ist, durch Öffnen der Kluppe den Vorhang fallen zu lassen.

Aus der DE 299 06 503 U ist eine solche Vorrichtung bekannt. Die Andrückplatte ist dabei als zweiarmiger Hebel ausgebildet und die Ankerplatte ist verstellbar an der Andrückplatte befestigt. Durch die Verstellung ist eine Anpassung an die Dicke der zu haltenden Textilien gegeben. Aufgrund der Kinematik eines solchen Systems ist nur eine geringe Toleranz gegenüber Schwankungen der Dicke möglich, d.h., dass es z.B. beim Auftreten von Falten zu einer unzureichenden Funktion kommen kann.

Darüber hinaus ist das Schalten des Elektromagneten stets mit einer durch das Aufeinanderschlagen von Metallteilen verursachten Geräuschentwicklung verbunden, die insbesondere im Theater unerwünscht ist.

Aufgabe der vorliegenden Erfindung ist es, diese Nachteile zu vermeiden und eine Lösung anzugeben, die tolerant gegenüber Schwankungen in der Dicke der Textilien ist und die lautlos schaltbar ist.

Erfindungsgemäß ist vorgesehen, dass die Ankerplatte am Haltekörper gelagert ist und durch ein einstellbares Verbindungselement mit der Andrückplatte gekoppelt ist, und dass die Lagerung der Ankerplatte am Haltekörper zwischen der Lagerung der Andrückplatte und dem einstellbaren Verbindungselement angeordnet ist.

Überraschenderweise hatte sich herausgestellt, dass die oben beschriebenen Aufgaben durch die Kombination von zwei erfindungswesentlichen Merkmalen elegant gelöst werden können. Zum einen ist es wichtig, die Ankerplatte nicht lediglich an der Andrückplatte vorzunehmen, sondern direkt am Haltekörper, und zum anderen soll durch die spezielle Anordnung der Schwenkachsen erreicht werden, dass die Ankerplatte in allen Stellungen im unmittelbaren Einflussbereich des Elektromagnets verbleibt. Bei der erfindungsgemäßen Lösung wird eine Art Gelenkviereck realisiert, bei dem eine geringe Verschwenkung der Ankerplatte zu einer vergleichsweisen großen Öffnung der Kluppe führt. Von besonderem Vorteil ist es dabei, wenn der Abstand zwischen der Lagerung der Ankerplatte und dem einstellbaren Verbindungselement zwischen 50% und 80% des Abstands zwischen der Lagerung der Andrückplatte und dem einstellbaren Verbindungselement beträgt. Dadurch können besonders günstige Kräfteverhältnisse erreicht werden.

Insbesondere ist es in diesem Zusammenhang von besonderem Vorteil, wenn in der geschlossenen Stellung der Kluppe ein Hauptabschnitt der Andrückplatte und ein Hauptabschnitt der Ankerplatte im Wesentlichen parallel zueinander angeordnet sind. Dies ermöglicht eine kompakte und Platz sparende Konstruktion.

Eine besonders günstige Bauweise, bei der die Andrückplatte als einarmiger Hebel ausgebildet ist, kann dadurch verwirklicht werden, dass eine Angriffsfläche des Elektromagnets an der Ankerplatte zwischen der Lagerung der Ankerplatte und dem einstellbaren Verbindungselement angeordnet ist.

Überdies ist es in konstruktiver Hinsicht besonders günstig, dass der Haltekörper einen U-förmigen Querschnitt aufweist und dass der Elektromagnet darin aufgenommen ist.

In Anbetracht des Umstandes, dass die erfindungsgemäße Vorrichtung besonders dafür ausgebildet ist, Vorhänge zu halten, ist es von Vorteil, wenn die Andrückplatte und die Gegenplatte jeweils einen um etwa 45° abgewickelten Endbereich aufweisen. Dadurch ist es möglich einen eventuellen Saum des Vorganges problemlos im in dem sich erweiternden Raum zwischen Andrückplatte und Gegenplatte aufzunehmen.

Eine besonders geringe Geräuschentwicklung kann dadurch erreicht werden, dass das einstellbare Verbindungselement auf Elastomeren gelagert ist.

In der Folge wird die Erfindung anhand der in den Figuren dargestellten

Ausführungsvariante näher erläutert. Es zeigen schematisch:

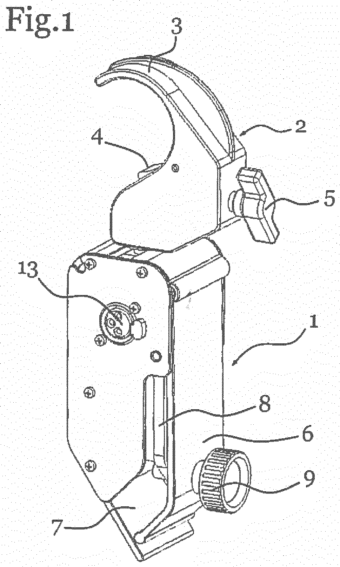

Fig. 1 den grundsätzlichen Aufbau einer Ausführungsvariante der Erfindung in einer Schrägansicht;
Fig. 2 die Ausführungsvariante der Fig. 1 in einer seitlichen Ansicht in geschlossenem Zustand;
Fig. 3 eine Darstellung entsprechend der Fig. 2 in geöffnetem Zustand.

Die erfindungsgemäße Vorrichtung besteht aus einem Haltekörper 1, der gleichzeitig ein Gehäuse bildet, an dem eine Klemme 2 angebracht ist, um die Vorrichtung an einer festen Struktur, beispielsweise einer Stange, zu befestigen. Die Klemme 2 besitzt einen gekrümmten Arm 3, der mit einer verstellbaren Zunge 4 zusammenwirkt, die durch eine Rändelschraube 5 betätigt werden kann, um die Vorrichtung an einer nicht dargestellten Stange festzulegen.

Am Haltekörper 1 ist eine Andrückplatte 6 um eine Achse 6a schwenkbar gelagert. An dem der Achse 6a gegenüberliegenden Ende besitzt die Andrückplatte 6 einen abgewinkelten Endbereich 6b. Die Andrückplatte 6 wirkt mit einer Gegenplatte 7 zusammen, um eine Kluppe zu bilden, die zum Festhalten eines Vorhangs oder dergleichen dient. Dazu besitzt die Gegenplatte 7 ebenfalls einen abgewinkelten Endbereich 7b. Durch die Abwinkelung um etwa 45° wird erreicht, dass die beiden Endbereiche 6b, 7b einen Winkel von etwa 90° einschließen, was für die Befestigung des Vorhangs ideal ist.

Die Betätigung der Andrückplatte 6 erfolgt durch eine Ankerplatte 8, die um eine Achse 8a schwenkbar gelagert ist und die mit der Andrückplatte 6 über ein einstellbares Verbindungselement 9 in der Form einer Rändelschraube verbunden ist. Elastomerelemente dienen zur Geräuschdämpfung zwischen Andrückplatte 6, Ankerplatte 8 und Verbindungselement 9.

Der Abschnitt der Ankerplatte 8 zwischen der Lagerung 8a und dem Verbindungselement 9 ist als Angriffsfläche 8c ausgebildet, die mit dem Elektromagnet 10 zusammenwirkt.

Die Andrückplatte 6 ist durch einen Elektromagnet 10 in die geschlossene Stellung der Kluppe spannbar, in welcher die Ankerplatte 8 idealerweise am Elektromagnet 10 anliegt oder minimal von diesem entfernt ist. Im angesteuerten Zustand hält der Elektromagnet 10 den Vorhang fest und gibt ihn frei, wenn die Ansteuerung beendet ist. Die Kluppe öffnet sich durch den Zug des Vorhangs 12 und gegebenenfalls durch das Eigengewicht der Andrückplatte 6, wenn die Vorrichtung etwas schräg zur Vertikalen montiert ist.

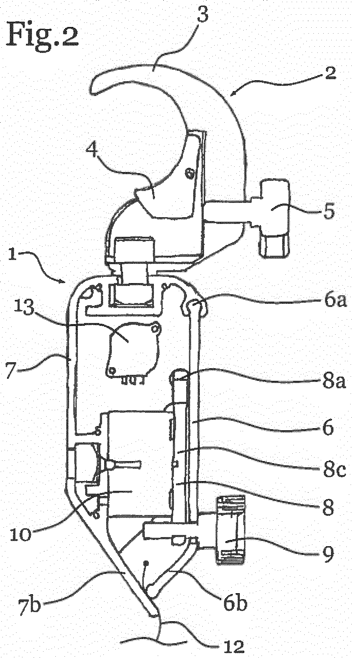

Bei der Darstellung von Fig. 2 ist beispielhaft ein Vorhang 12 von sehr geringer Dicke dargestellt, der zwischen den abgewickelten Endbereichen 6b, 7b der Andrückplatte 6 und der Gegenplatte 7 eingeklemmt ist. Sollte jedoch ein Vorhang 12 mit einer größeren Dicke zu halten sein, wird das Verbindungselement 9 so eingestellt, dass die Ankerplatte 8 im Wesentlichen die gleiche Stellung wie dargestellt einnimmt, während hingegen die Andrückplatte 6 entsprechend nach rechts (in Fig. 2 ) ausgeschwenkt ist.

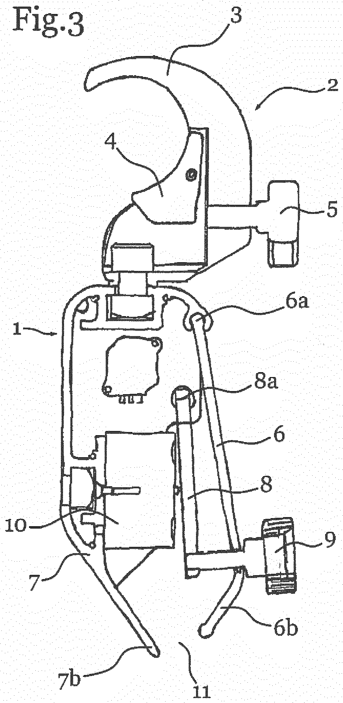

Bei der Darstellung in Fig. 3 ist die Vorrichtung in geöffneter Darstellung gezeigt, in der ein ausreichend großer Freiraum 11 zwischen den abgewickelten Endbereichen 6b, 7b von Andrückplatte 6 und Gegenplatte 7 gegeben ist, um den Vorhang 12 fallen zu lassen.

Der Elektromagnet 10 wird elektrisch über einen Anschluss 13 versorgt, wobei bevorzugt ein Bus-System verwendet wird, um Stromversorgung und Auslösung voneinander zu entkoppeln. Auf diese Weise ist es möglich, mehrere erfindungsgemäße Vorrichtungen in serieller Weise einfach anzusteuern, wobei es dennoch aber möglich ist, jede einzelne Vorrichtung getrennt zu steuern.

## Patentansprüche

1. Vorrichtung zum Aufhängen von Textilien, wie etwa Vorhängen, mit einem Haltekörper (1), der an einer festen Struktur befestigbar ist, einer am Haltekörper (1) fest angebrachten Gegenplatte (7), einer gelenkig am Haltekörper (1) befestigten Andrückplatte (6), wobei die Andrückplatte (6) mit der Gegenplatte (7) eine Kluppe zum Festhalten der Textilien bildet, und mit einem Elektromagnet (10), der mit einer Ankerplatte (8) zusammenwirkt, um die Kluppe zu schließen, **dadurch gekennzeichnet, dass** die Ankerplatte(8) am Haltekörper (1) gelagert ist und durch ein einstellbares Verbindungselement (9) mit der Andrückplatte (6) gekoppelt ist, und dass die Lagerung der Ankerplatte (8) am Haltekörper (1) zwischen der Lagerung der Andrückplatte (6) und dem einstellbaren Verbindungselement (9) angeordnet ist.

2. Vorrichtung nach Anspruch 1, **dadurch gekennzeichnet, dass** in der geschlossenen Stellung der Kluppe ein Hauptabschnitt der Andrückplatte (6) und ein Hauptabschnitt der Ankerplatte (8) im Wesentlichen parallel zueinander angeordnet sind.

3. Vorrichtung nach einem der Ansprüche 1 oder 2, **dadurch gekennzeichnet, dass** eine Angriffsfläche (8c) für den Elektromagnet (10) an der Ankerplatte (8) zwischen der Lagerung (8a) der Ankerplatte (8) und dem einstellbaren Verbindungselement (9) angeordnet ist.

4. Vorrichtung nach einem der Ansprüche 1 bis 3, **dadurch gekennzeichnet, dass** der Haltekörper (1) einen U-förmigen Querschnitt aufweist und dass der Elektromagnet (10) darin aufgenommen ist.

5. Vorrichtung nach einem der Ansprüche 1 bis 4, **dadurch gekennzeichnet, dass** die Andrückplatte (6) und die Gegenplatte (7) jeweils einen um etwa 45° abgewickelten Endbereich aufweisen.

6. Vorrichtung nach einem der Ansprüche 1 bis 5, **dadurch gekennzeichnet, dass** das einstellbare Verbindungselement (9) auf Elastomeren gelagert ist.

7. Vorrichtung nach einem der Ansprüche 1 bis 6, **dadurch gekennzeichnet, dass** der Abstand zwischen der Lagerung (8a) der Ankerplatte (8) und dem einstellbaren Verbindungselement (9) zwischen 50% und 80% des Abstands zwischen der Lagerung (6a) der Andrückplatte (6) und dem einstellbaren Verbindungselement (9) beträgt.

## Claims

1. A device for the hanging of textiles, such as, for example, curtains, with a holding element (1) that can be fastened on a fixed structure, a counterplate (7) securely attached on the holding element (1), a pressure plate (6) fastened on the holding element (1) in a hinged manner, wherein the pressure plate (6) with the counter plate (7) forms a clip for securing the textiles, and with an electromagnet (10) that interacts with an armature plate (8) so as to close the clip, **characterized in that** the armature plate (8) is mounted on the holding element (1) and is coupled to the pressure plate (6) by means of an adjustable connecting element (9), and that the mounting of the armature plate (8) on the holding element (1) is arranged between the mounting of the pressure plate (6) and the adjustable connecting element (9).

2. The device according to claim 1, **characterized in that** in the closed position of the clip, a main section of the pressure plate (6) and a main section of the armature plate (8) are arranged substantially parallel to one another.

3. The device according to any one of claims 1 or 2, **characterized in that** a contact surface (8c) for the electromagnet (10) on the armature plate (8) is arranged between the mounting (8a) of the armature plate (8) and the adjustable connecting element (9).

4. The device according to any one of claims 1 to 3, **characterized in that** the holding element (1) has a U-shaped cross-section and the electromagnet (10) is accommodated therein.

5. The device according to any one of claims 1 to 4, **characterized in that** the pressure plate (6) and the counterplate (7) each have an end region angled by approximately 45°.

6. The device according to any one of claims 1 to 5, **characterized in that** the adjustable connecting element (9) is mounted on elastomers.

7. The device according to any one of claims 1 to 6, **characterized in that** the distance between the mounting (8a) of the armature plate (8) and the adjustable connecting element (9) is between 50 % and 80 % of the distance between the mounting (6a) of the pressure plate (6) and the adjustable connecting element (9).

## Revendications

1. Dispositif pour suspendre des textiles, tels par exemple des rideaux, avec un corps de retenue (1) pouvant être fixé sur une structure fixe, une contre-plaque (7) aménagée de façon fixe sur le corps de retenue (1), une plaque de serrage (6) fixée de façon articulée sur le corps de retenue (1), dans lequel la plaque de serrage (6) forme, avec la contre-plaque (7), une pince pour retenir les textiles, et avec un électro-aimant (10) qui coopère avec une plaque d'ancrage (8) pour fermer la pince, **caractérisé en ce que** la plaque d'ancrage (8) est montée sur le corps de retenue (1) et est couplée avec la plaque de serrage (6) grâce à un élément de liaison (9) réglable, et **en ce que** le logement de la plaque d'ancrage (8) sur le corps de retenue (1) est disposé entre le logement de la plaque de serrage (6) et l'élément de liaison (9) réglable.

2. Dispositif selon la revendication 1, **caractérisé en ce que**, dans la position fermée de la pince, une partie principale de la plaque de serrage (6) et une partie principale de la plaque d'ancrage (8) sont disposées sensiblement parallèlement l'une par rapport à l'autre.

3. Dispositif selon l'une des revendications 1 ou 2, **caractérisé en ce qu'**une surface d'attaque (8c) pour l'électro-aimant (10) est disposée sur la plaque d'ancrage (8) entre le logement (8a) de la plaque d'ancrage (8) et l'élément de liaison réglable (9).

4. Dispositif selon l'une des revendications 1 à 3, **caractérisé en ce que** le corps de retenue (1) présente une section transversale en forme de U et **en ce que** l'électro-aimant (10) est réceptionné dans celle-ci.

5. Dispositif selon l'une des revendications 1 à 4, **caractérisé en ce que** la plaque de serrage (6) et la contre-plaque (7) présentent respectivement une zone d'extrémité courbée de près de 45°.

6. Dispositif selon l'une des revendications 1 à 5, **caractérisé en ce que** l'élément de liaison réglable (9) est monté sur des élastomères.

7. Dispositif selon l'une des revendications 1 à 6, **caractérisé en ce que** la distance entre le logement (8a) de la plaque d'ancrage (8) et l'élément de liaison réglable (9) comprend de 50 % à 80 % de la distance entre le logement (6a) de la plaque de serrage (6) et l'élément de liaison réglable (9).
